# EUROPÄISCHE PATENTSCHRIFT

(11) **EP 0 561 211 B1**
(45) Veröffentlichungstag und Bekanntmachung des Hinweises auf die Patenterteilung: **04.01.1995**
(21) Anmeldenummer: 93103341.9
(22) Anmeldetag: 03.03.1993
(51) Int. Cl.: F16L 11/16

(54) **Agraffschlauch**
Hose with interlocking parts
Tuyau souple agrafé

(30) Priorität: 18.03.1992 DE 4208603; 09.02.1993 DE 4303699
(43) Veröffentlichungstag der Anmeldung: 22.09.1993
(73) Patentinhaber: Witzenmann GmbH Metallschlauch-Fabrik Pforzheim, D-75175 Pforzheim (DE)
(72) Erfinder: Pluschke, Michael, W-7540 Neuenbürg-Rotenbach (DE)
(74) Vertreter: Lemcke, Rupert, Dipl.-Ing.

(56) Entgegenhaltungen:
- DE-C- 3 804 105
- FR-A- 2 323 944
- GB-A- 1 043 278
- US-A- 2 841 183

## Beschreibung

Die Erfindung betrifft einen Agraffschlauch für Abgasanl agen von Kraftfahrzeugen mit rundem oder regelmäßig vieleckigem Querschnitt, schraubengangförmig gewickelt aus einem vorprofilierten Metallband unter Verfalzen benachbarter Bandkanten.

Bei derartigen Agraffschläuchen geschieht die Verfalzung benachbarter Kanten dadurch, daß das Band im wesentlichen S-förmig profiliert wird, wobei in der Mitte des Profils ein Steg entsteht, der später im wesentlichen radial zum Schlauchliegt, und wobei die S-Haken benachbarter Bandkanten in hintergreifenden Eingriff gebracht werden, so daß der Falz in Radialrichtung des Schlauches gesehen aus vier Lagen des Bandmaterials besteht.

Von solchen Agraffschläuchen, die bestimmungsgemäß als bewegliche Leitungselemente für Abgasleitungen von Kraftfahrzeugen verwendet werden, werden gleichzeitig angulare, axiale, laterale und torsionale Beweglichkeit und darüber hinaus ein hohes Maß an Dichtigkeit und geringer Schallabstrahlung gefordert. Diese Forderungen stehen zueinander im Widerspruch. Denn gute Dichtigkeit und geringe Schallabstrahlung erfordern ein festes Wickeln des Agraffschlauches, durch das jedoch seine Beweglichkeit zum Teil stark eingeschränkt wird. Dazu kommt, daß die Schläuche bei den in einer Abgasanlage auftretenden hohen Temperaturbelastungen versteifen, was seine Ursache vor allem in den im Material befindlichen Eigenspannungen hat, die beim Wickeln des Metallbandes zum Agraffschlauch durch die Verformung des Metallbandes entstehen. Dadurch erhöhen sich bezüglich der vorstehend angegebenen Grüßen die Verstellkräfte. Da aber der Schlauch Verstellbewegungen der genannten Art zwangsweise unterworfen ist, bedeutet dies entgegen der eingetretenen Versteifung ein dauerndes Wiedergängigmachen des Schlauches, was mit einem gewissen Verschleiß verbunden ist . Daraus resultiert letztendlich eine zunehmende Undichtigkeit bzw. eine Erhöhung der Leckrate des Schlauches.

Umwelt- und Lärmschutzauflagen stellen jedoch inzwischen immer strengere Anforderungen an die Dichtigkeit derartiger Agraffschläuche. Größere Nennweiten zur Erlangung niedriger Schallpegel und größerer Beweglichkeit bei beengten Einbauverhältnissen werden gefordert. Diese Forderungen können bisher gleichzeitig nur teilweise erfüllt werden. Es gelingt nämlich nicht, einen bestimmten Schlauch der eingangs genannten Art ohne Rückwirkung auf seine Beweglichkeit dichter zu gestalten. Dabei nimmt die Undichtigkeit sowohl mit der Nennweite des Schlauches als auch mit der verarbeiteten Bandbreite zu. Größere Nennweiten werden jedoch in zunehmenden Maße erforderlich und eine größere Bandbreite ist deshalb notwendig, weil sie dem Schlauch eine größere Beweglichkeit gibt, indem der Anteil der Totzonen im Falz verringert wird, die durch die radialen Falzteile gegeben sind.

Aufgabe der Erfindung ist es daher, einen Agraffschlauch der eingangs genannten Art auf einfache Weise dahingehend zu verbessern, daß seine Eigenschaften hinsichtlich angularer, axialer, lateraler und torsionaler Beweglichkeit sowie Dichtigkeit und Schallabstrahlung auch bei langer Betriebsdauer auf einem angenähert gleichem Niveau bleiben.

Diese Aufgabe ist ausgehend von einem Agraffschlauch der eingangs genannten Art erfindungsgemäß dadurch gelöst, daß das Metallband aus mehreren gleichartig verformten, über ihre gesamte Breite wenigstens mittelbar aneinanderliegenden Lagen besteht.

Diese Maßnahme hat die Wirkung, daß sich im Agraffschlauch beim Wickeln vergleichsweise wesentlich geringere Eigenspannungen durch die Formänderung des Metallbandes ausbilden. Denn das Biegen von dünnerem Metallband benötigt weniger Energie mit der Folge, daß nach dem Biegen auch eine entsprechend geringere Eigenspannung in der jeweiligen Metallbandlage vorhanden ist. Das hat aber dann wiederum auch zur Folge, daß die einzelne Metallbandlage unter betriebsbedingter Temperaturbeanspruchung eine geringere Wärmeversteifung erfährt. Dabei bleiben auch unter Temperaturbelastung die vom Agraffschlauch geforderte angulare, axiale, laterale und torsionale Beweglichkeit sowie darüber hinaus die beim Wickeln eingebrachte Dichtigkeit und Verdrehfestigkeit über die Betriebszeit des Agraffschlauches in annähernd gleichem Maße erhalten.

Als zweckmäßig hat es sich erwiesen, daß wenigstens eine der Bandlagen einen anderen Werkstoff aufweist als die anderen Bandlagen. Auf diese Weise läßt sich auf das Verhalten des Bandes bei der Herstellung des Agraffschlauches sowie die Widerstandsfähigkeit des Bandmaterials gegen die betriebsbedingten Belastungen individuell Einfluß nehmen.

In diesem Sinne hat es sich ferner als vorteilhaft erwiesen, daß die äußere oder innere der Bandlagen aus einem erhöhte Gleiteigenschaften aufweisenden Werkstoff besteht, wobei hier zweckmäßigerweise die Bandlage mit erhöhten Gleiteigenschaften ein Kupferband, ein Messingband oder ein kunststoffbeschichtetes Metallband sein kann. Dadurch wird innerhalb des durch Ineinandergreifen benachbarter Bandkanten gebildeten Falzes der Reibungswiderstand verringert und somit die Beweglichkeit verbessert, so daß es zu geringerem Material verschleiß kommt, folglich auch die Leckrate des Schlauches während des Betriebs nicht steigt und die durch den Schlauch gegebene Dämpfung angenähert konstant bleibt.

Zweckmäßig ist es ferner, daß zwischen wenigstens einer äußeren und einer inneren Metallbandlage mindestens eine weitere Lage mit elastisch federnden Eigenschaften in Form eines gegebenenfalls profilierten Bandes, eines Gestrickes, Geflechtes, Vlieses oder dergleichen aus durch Metall - oder Keramikmaterial gebildeten Drähten, Fäden oder Fasern angeordnet ist. Auf diese Weise läßt sich dem Metallbandmaterial eine stark schwingungs- und damit geräuschdämpfende Komponente beifügen, die in erheblicher Weise der entsprechenden Abkopplung dienen kann, bei einem Kraftfahrzeug der Abkopplung der durch den Motor bedingten Schwingungen gegenüber dem Fahrgastraum.

Hier kann es auch schon ausreichen, wenn nach einem weiteren Merkmal der Erfindung diese weitere Lage nur innerhalb des Bereiches der durch die benachbarten Bandkanten gebildeten Falzes angeordnet ist. Hier kann er, wie auch schon im vorstehend geschilderten Falle, gleichzeitig auch eine gewisse "Nachstellwirkung" bezüglich eines Verschleißes innerhalb des Falzes entfalten.

In diesem Sinne ist es aber gleichermaßen auch möglich, daß zwischen die durch benachbarte Bandkanten gebildeten Falzlagen eine zusätzliche Lage mit elastisch federnden Eigenschaften in Form eines gegebenenfalls profilierten Bandes, eines Gestrickes, Geflechtes, Vlieses oder dergleichen aus durch Metall - oder Keramikmaterial gebildeten Drähten, Fäden oder Fasern angeordnet ist. Hier wird also die zusätzliche Lage dem mehrlagigen Metallband im Bereich der falzbildenden Bandkanten von außerhalb zugefügt, um dämpfend zu wirken und reibungsbedingten Verschleiß auszugleichen. Dabei kann in diesem Falle auch vorgesehen sein, daß das Gestricke, Geflecht, Vlies oder dergleichem der zusätzlichen Lage mit einem Füllstoff aus Graphit und/oder Glimmer versehen ist, womit sich innerhalb des Falzes auch noch eine besondere Verbesserung der Dichtwirkung anbringen läßt.

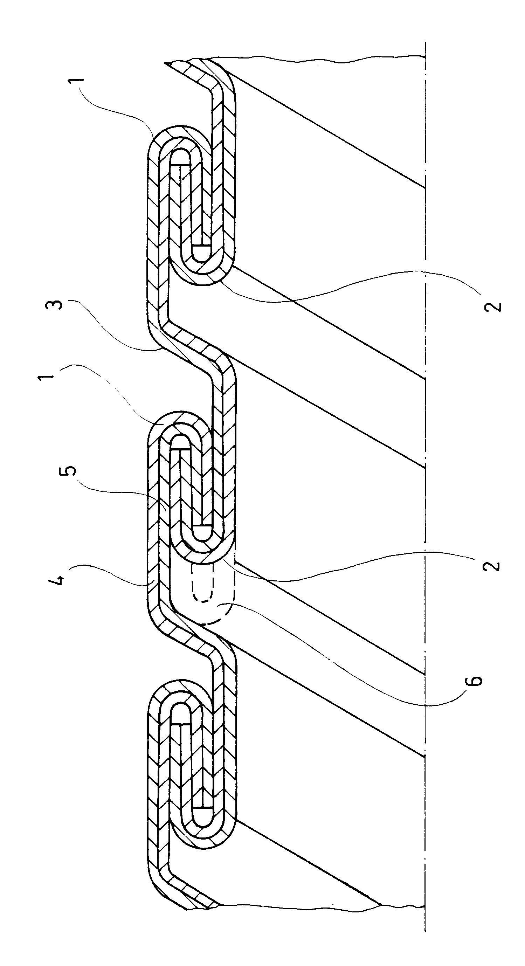

Weitere Merkmale und Einzelheiten der Erfindung ergeben sich aus der nachfolgenden Beschreibung einer Ausführungsform, die auf der Zeichnung dargestellt ist.

Die Zeichnung zeigt ein Stück eines Agraffschlauches in axialem Halbschnitt. Der Agraffschlauch kann einen runden oder regelmäßig vieleckigen Querschnitt aufweisen. Im vorliegenden Falle ist der Schnitt durch einen Agraffschlauch mit rundem Querschnitt gezeigt.

Wie ersichtlich, wird der Agraffschlauch aus einem S-förmig profilierten Band gewickelt unter Verfalzung benachbarter Bandkanten derart, daß die S-Haken 1, 2 benachbarter Bandkanten in hintergreifenden Eingriff gebracht werden, wobei in der Mitte des jeweiligen Profils ein Steg 3 entsteht, der im wesentlichen radial zum Schlauch gelegen ist.

Das Bandmaterial, aus dem der Schlauch gewickelt ist, besteht im vorliegenden Falle aus zwei Bandlagen 4, 5, die man vor der Bildung des S-Profils zusammenlaufen läßt. Die Bandlagen 4, 5 sind verhältnismäßig dünnwandig. Es ergibt sich insgesamt eine Banddicke, die der Banddicke eines vergleichbaren bekannten Agraffschlauches aus einlagigem Metallband entspricht.

Wie bereits geschildert, bewirkt der Aufbau des Metallbandes aus mehreren Bandlagen 4, 5, daß die einzelne Bandlage recht dünnwandig ist, so daß sie nach der durch die Herstellung des Agraffschlauches bedingten Formänderung nur eine verhältnismäßig geringe Eigenspannung enthält, die bei der durch hohe Temperaturbelastung bedingten Versteifung des Schlauches auch nur zu einer ensprechend geringen Versteifungsgröße führt. Dadurch bleibt der Agraffschlauch auch über längere Betriebszeit praktisch so beweglich hinsichtlich angularer, axialer, lateraler und torsionaler Bewegungen, wie er es unmittelbar nach seiner Herstellung war. Die axiale Beweglichkeit ist bei 6 angedeutet, wo der S-Haken 2 axial nach links gegenüber dem S-Haken 1 verschoben ist.

Dadurch, daß der dargestellte Agraffschlauch nur eine geringe wärmebedingte Versteifung erfährt, führen die genannten Beweglichkeiten zu einem entsprechend geringen Verschleiß zwischen miteinander verfalzten S-Haken, so daß die Dichtigkeit des Schlauches auch über längere Betriebszeit praktisch unbeeinträchtigt bleibt.

Um das Verschleißverhalten bei der gegenseitigen Bewegung miteinander verfalzter S-Haken 1, 2 zu verbessern, kann vorgesehen sein, daß entweder die Lage 4 oder die Lage 5 aus einem Werkstoff mit erhöhten Gleiteigenschaften besteht, wofür beispielsweise als Werkstoff Kupfer, Messing oder ein kunststoffbeschichtetes Metallband in Frage kommen . Sollte eine gegenüber der Darstellung noch größere Zahl von Lagen vorgesehen sein, so ist darauf zu achten, daß die Bandlage mit der erhöhten Gleiteigenschaft entweder die äußere oder die innere Lage des Bandpaketes ist, nämlich eine der Lagen, die am Falz mit der Bandkante des nächsten Bandwickels in Berührung tritt.

Beim dargestellten Gegenstand besteht außerdem die Möglichkeit, zwischen den Bandlagen 4, 5 eine weitere Lage mit elastisch federnden Eigenschaften anzubringen, die aus einem profilierten Band, einem Gestricke, Geflecht, Vlies oder dergleichen bestehen kann, welch letztere durch Metall- oder Keramikmaterial in Form von Drähten, Fäden oder Fasern gebildet sind. Damit läßt sich innerhalb des den Agraffschlauch bildenden Bandmaterials eine Dämpfungskomponente unterbringen zur Abkopplung von Geräuschen und Schwingungen. Ausreichend wäre in diesem Zusammenhang allein schon, wenn eine solche weitere Lage zwischen den Bandlagen innerhalb des Bereiches der durch die benachbarten Bandkanten gebildeten Falzes vorgesehen wird, wobei dann die Bandlagen im übrigen Bereich unmittelbar aneinanderliegen.

Denkbar ist es jedoch auch, den Bandkanten im Bereich ihrer der Falzbildung dienenden Breite von außen oder innen eine zusätzliche Lage mit elastisch federnden Eigenschaften in Form eines gegebenenfalls profilierten Bandes, eines Gestrickes, Geflechtes , Vlieses oder dergleichen aus durch Metall- oder Keramikmaterial gebildeten Drähten, Fäden oder Fasern hinzuzufügen, um einmal die genannte Dämpfungswirkung zu erzielen und zum anderen innerhalb des Falzes während des Betriebs auftretenden Verschleißerscheinungen entgegenzuwirken bzw. diese zu kompensieren. Dabei kann in diesem Falle bei Verwendung eines Gestrickes, Geflechtes, Vlieses oder dergleichen auch vorgesehen sein, daß dieses Material mit einem Füllstoff aus Graphit und/oder Glimmer versehen ist, um gleichzeitig eine besonders hohe Dichtwirkung zu erzielen.

## Patentansprüche

1. Agraffschlauch mit rundem oder regelmäßig vieleckigem Querschnitt, schraubengangförmig gewickelt aus einem vorprofiliertem Metallband unter Verfalzen benachbarter Bandkanten,
dadurch gekennzeichnet,
daß das Metallband aus mehreren gleichartig verformten, über ihre gesamte Breite wenigstens mittelbar aneinander-liegenden Lagen (4, 5) besteht.

2. Agraffschlauch nach Anspruch 1,
dadurch gekennzeichnet,
daß die Bandstärke des mehrlagigen Metallbandes (4, 5) der eines vergleichbaren einlagigen Bandes im wesentlichen entspricht.

3. Agraffschlauch nach Anspruch 1,
dadurch gekennzeichnet,
daß wenigstens eine der Bandlagen (4, 5) einen anderen Werkstoff aufweist als die anderen Bandlagen.

4. Agraffschlauch nach Anspruch 3,
dadurch gekennzeichnet,
daß die äußere (4) oder innere (5) der Bandlagen aus einem erhöhte Gleiteigenschaften aufweisenden Werkstoff besteht.

5. Agraffschlauch nach Anspruch 4,
dadurch gekennzeichnet,
daß die Bandlage (4, 5) mit erhöhten Gleiteigenschaften ein Kupferband, ein Messingband oder ein kunststoffbeschichtetes Metallband ist.

6. Agraffschlauch nach einem der vorhergehenden Ansprüche,
dadurch gekennzeichnet,
daß zwischen wenigstens einer äußeren und einer inneren Metallbandlage mindestens eine weitere Lage mit elastisch federnden Eigenschaften in Form eines gegebenenfalls profilierten Bandes, eines Gestrickes, Geflechtes, Vlieses oder dergleichen aus durch Metall- oder Keramikmaterial gebildeten Drähten, Fäden oder Fasern angeordnet ist.

7. Agraffschlauch nach Anspruch 6,
dadurch gekennzeichnet,
daß die weitere Lage nur innerhalb des Bereiches der durch die benachbarten Bandkanten gebildeten Falzes angeordnet ist.

8. Agraffschlauch nach einem der vorhergehenden Ansprüche,
dadurch gekennzeichnet,
daß zwischen die durch benachbarte Bandkanten gebildeten Falzlagen eine zusätzliche Lage mit elastisch federnden Eigenschaften in Form eines gegebenenfalls profilierten Bandes, eines Gestrickes, Geflechtes, Vlieses oder dergleichen aus durch Metall- oder Keramikmaterial gebildeten Drähten, Fäden oder Fasern angeordnet ist.

9. Agraffschlauch nach Anspruch 8,
dadurch gekennzeichnet,
daß das Gestricke, Geflecht, Vlies oder dergleichen der zusätzlichen Lage mit einem Füllstoff aus Graphit und/oder Glimmer versehen ist.

## Claims

1. A hose with interlocking parts having a circular or regular rectangular cross-section, helically wound from a pre-profiled metallic band with notching of adjacent band edges,
characterised in that
the metallic band consists of a plurality of similarly deformed plies (4, 5) which over their entire width lie at least indirectly next to each other.

2. A hose with interlocking parts according to claim 1,
characterised in that
the gauge of the multi-ply metallic band (4, 5) corresponds essentially to that of a comparable single-ply band.

3. A hose with interlocking parts according to claim 1,
characterised in that
at least one of the band plies (4, 5) consists of a material different from the other band plies.

4. A hose with interlocking parts according to claim 3,
characterised in that
the outer (4) or inner (5) of the band plies is made of a material which has enhanced anti-friction properties.

5. A hose with interlocking parts according to claim 4,
characterised in that
the band ply (4, 5) of enhanced anti-friction properties is a copper band, a brass band or a plastic-coated metallic band.

6. A hose with interlocking parts according to any one of the preceding claims,
characterised in that
at least one further ply or elastically resilient properties is arranged between at least one outer and one inner metallic band ply which is in the form of an optionally profiled band, a knitted fabric, a braid, a fleece or the like made of wires, filaments or fibres of metallic or ceramic material.

7. A hose with interlocking parts according to claim 6,
characterised in that
the further ply is arranged only within the zone of the notch formed by the adjacent band edges.

8. A hose with interlocking parts according to any one of the preceding claims,
characterised in that
an additional ply with elastically resilient properties is arranged between the notched plies formed by the adjacent band edges which is in the form of an optionally profiled band, a knitted fabric, a braid, a fleece or the like constructed from wires, filaments or fibres of metallic or ceramic material.

9. A hose with interlocking parts according to claim 8,
characterised in that
the knitted fabric, braid or fleece or the like of the additional ply is provided with a filler material of graphite and/or mica.

## Revendications

1. Tuyau souple agrafé à section transversale circulaire ou polygonale régulière, enroulé sous forme de pas de vis à partir d'une bande métallique servant d'ébauche, par emboîtage de bords de bande voisins, caractérisé en ce que la bande métallique se compose de plusieurs couches (4, 5) analogues déformées, qui sont disposées au moins indirectement les unes contre les autres sur toute leur largeur.

2. Tuyau souple agrafé selon la revendication 1, caractérisé en ce que l'épaisseur de la bande métallique à plusieurs couches (4, 5) correspond sensiblement à celle d'une bande comparable à une seule couche.

3. Tuyau souple agrafé selon la revendication 1, caractérise en ce qu'au moins une des couches (4, 5) de la bande est réalisée en un matériau différent de celui des autres couches de la bande.

4. Tuyau souple agrafé selon la revendication 3, caractérisé en ce que la couche extérieure (4) ou intérieure (5) de la bande, est réalisée en un matériau présentant des qualités élevées de glissement.

5. Tuyau souple agrafé selon la revendication 4, caractérisé en ce que la couche (4, 5) de la bande, présentant des qualités élevées de glissement, est une bande de cuivre, de laiton ou une bande métallique recouverte de plastique.

6. Tuyau souple agrafé selon l'une des revendications précédentes, caractérisé en ce qu'entre au moins une couche extérieure et une couche intérieure de la bande métallique est disposée une couche supplémentaire présentant des propriétés élastiques, sous forme d'une bande éventuellement profilée, d'un tricotage, d'un treillis, d'une toison ou analogue, réalisés à partir de fils, de brins ou de fibres réalisés en métal ou en céramique.

7. Tuyau souple agrafé selon la revendication 6, caractérisé en ce que la couche supplémentaire est disposée seulement à l'intérieur de la zone de l'emboîtement formé par les bords de bande voisins.

8. Tuyau souple agrafé selon l'une des revendications précédentes, caractérisé en ce qu'entre les couches de l'emboîtement formé par les bords de bande voisins, est disposée une couche additionnelle présentant des propriétés élastiques, sous forme d'une bande éventuellement profilée, d'un tricotage, d'un treillis, d'une toison ou analogue, réalisés à partir de fils, de brins ou de fibres réalisés en métal ou en céramique.

9. Tuyau souple agrafé selon la revendication 8, caractérisé en ce que le tricotage, le treillis, la toison ou analogue constituant la couche additionnelle, est pourvu d'une matière de remplissage en graphite et/ou nica.
